# FASCICULE DE BREVET EUROPEEN

(11) **EP 2 125 301 B1**
(45) Date de publication et mention de la délivrance du brevet: **05.01.2011**
(21) Numéro de dépôt: 08775601.1
(22) Date de dépôt: 26.02.2008
(51) Int. Cl.: B25J 17/02

(54) **ROBOT MANIPULATEUR COMPACT**
KOMPAKTER MANIPULATIONSROBOTER
COMPACT MANIPULATION ROBOT

(30) Priorité: 28.02.2007 FR 0701459
(43) Date de publication de la demande: 02.12.2009
(73) Titulaire: Marel Food Systems hf., 210 Gardabær (IS)
(72) Inventeur: Chenu, Jean-Marie, 44100 Nantes (FR)
(74) Mandataire: Tournel, Jean Louis
(86) Numéro de dépôt international: PCT/FR2008/000250
(87) Numéro de publication internationale: WO 2008/122721

(56) Documents cités:
- EP-A- 1 129 829
- JP-A- 9 019 883

## Description

L'invention se rapporte à un dispositif de déplacement d'un objet dans l'espace.

Pour déplacer un objet dans l'espace, on connaît les bras manipulateurs dont les articulations sont montées en série et ceux dont les articulations sont montées en parallèles. Ces bras sont encore appelés robots.

Les robots types à articulations en série présentent l'inconvénient d'être relativement lourds et ont donc une inertie importante qui les empêche de travailler avec de grandes cadences.

Les robots dits parallèles permettent des déplacements beaucoup plus rapides mais l'amplitude des mouvements est restreinte.

L'invention se rapporte à un robot dit parallèle, et plus précisément à un dispositif selon le préambule de la revendication 1.

On connaît précisément de tels robots (EP-A-250 470, EP-A 1.129.829, WO-A-0035640) comprenant trois actionneurs, comprenant une partie fixe et une partie mobile ayant un seul degré de liberté par rapport à la partie fixe, chaque partie mobile étant reliée à une tête mobile par des éléments de liaison.

Le dispositif forme une sorte de pyramide déformable à bases triangulaires.

Chaque actionneur est un moteur électrique dont l'axe de rotation est couplé à un bras (partie mobile) qui pivote autour de l'axe de rotation de l'actionneur.

Les axes de pivots des bras forment un triangle et les éléments de liaison sont articulés respectivement à une tête (petite base) et à la partie mobile correspondante.

Les articulations de ces éléments de liaison tant sur le bras que sur la tête sont à deux degrés de liberté.

Ainsi, l'orientation et l'inclinaison de la tête restent inchangées dans l'espace. Souvent, un préhenseur à transmission télescopique est monté au centre du système. Un support central porte les actionneurs. Ce support central a sensiblement les dimensions définies par les trois axes de pivot.

Les paliers de rotation des bras qui pivotent sont à cheval sur les axes de pivot et inscrits chacun pour moitié dans la surface définie par les axes de pivot des bras.

Les bras sont, au moins dans leur partie terminale, radiaux et s'étendent vers l'extérieur du support central. L'amplitude de déplacement est minimisée par l'étendue du support qui doit avoir une taille suffisante pour porter les actionneurs et souvent un quatrième bras formant préhenseur reliant la grande base à la petite base. L'amplitude de mouvement est-liée à la longueur utile du bras.

L'encombrement est défini par le cercle passant par les extrémités des bras lorsque le système est en position neutre, les bras sont alors dans un même plan ici horizontal. Les axes des bras sont généralement montés de telle sorte que les axes longitudinaux des dits bras se coupent au centre du triangle formé par les axes de pivot.

On comprend bien que plus le support est de grande dimension pour un encombrement donné, plus la longueur des bras sera réduite. Ainsi pour un encombrement d'environ 550 millimètres de rayon, la longueur du bras est de 350 millimètres, la hauteur travail obtenue est ainsi de l'ordre de 300 millimètres et le diamètre de l'aire de travail de l'ordre de 1100 millimètres.

Pour augmenter la longueur des bras, pour un encombrement donné, il faudrait réduire la taille du support mais celui-ci dépend de la taille des actionneurs et dans les configurations connues il ne peut être fortement réduit.

Or, l'encombrement doit aussi être un facteur pris en compte pour l'implantation desdits robots. De plus qui dit réduire la taille du support dit aussi pour certaines des positions possibles des bras réduire la rigidité d'ensemble des éléments mobiles du robot. Ces contraints concourent à la définition actuelle de l'état de l'art qui est constitué de robots parallèles à large base fixe portant des bras rayonnants vers l'extérieur.

L'invention propose un dispositif qui apporte une plus grande compacité.

A cet effet, l'invention se rapporte à un dispositif de déplacement du type parallèle comprenant au moins trois bras pivotants chacun autour d'un axe de pivot, les axes de pivots formant en vue de dessus les cotés d'un polygone présentant un centre géométrique, chacun des bras étant actionné par un actionneur, et chacun de ces bras étant, en outre, relié à une tête formant une petite base par l'intermédiaire d'éléments de liaison articulés respectivement sur la tête et sur le bras, les articulations étant à deux degrés de liberté, la tête gardant toujours son orientation et son inclinaison, ce dispositif étant caractérisé en ce qu'en position dite neutre des bras, chaque bras est disposé de telle sorte que si on trace une droite parallèle à l'axe de pivot de l'un quelconque des bras, cette droite passant par le centre géométrique du polygone, ladite droite coupe ledit bras considéré.

L'invention sera bien comprise à la lecture de la description ci-après, faite à titre d'exemple non limitatif en regard du dessin qui représente :
FIG 1 : Art antérieur
FIG 2 un robot selon l'invention
FIG 3 le robot de la figure 2 avec les actionneurs positionnés à l'intérieur
FIG 4 une variante de robot avec axes inclinés
FIG 5 une vue en perspective du robot de la figure 4.
FIG 6 une autre variante de robot
FIG 7 une vue en perspective du robot de la figure 6
FIG 8 une troisième variante avec des bras non rectilignes
FIG 9 une quatrième variante avec quatre bras
FIG 10 un exemple de commande de l'outil de préhension
FIG 11 : la figure 10 vue de l'autre coté.
FIG 12 : vue de dessus d'une ligne de production avec des robots de l'art antérieur
FIG 13 : vue de dessus d'une ligne de production avec des robots selon l'invention
FIG 14 à 16 des exemples de têtes
FIG 17 : une variante d'un robot
FIG 18 : un moyen de guidage d'un préhenseur
FIG 19 : une variante du moyen de guidage de la figure 18

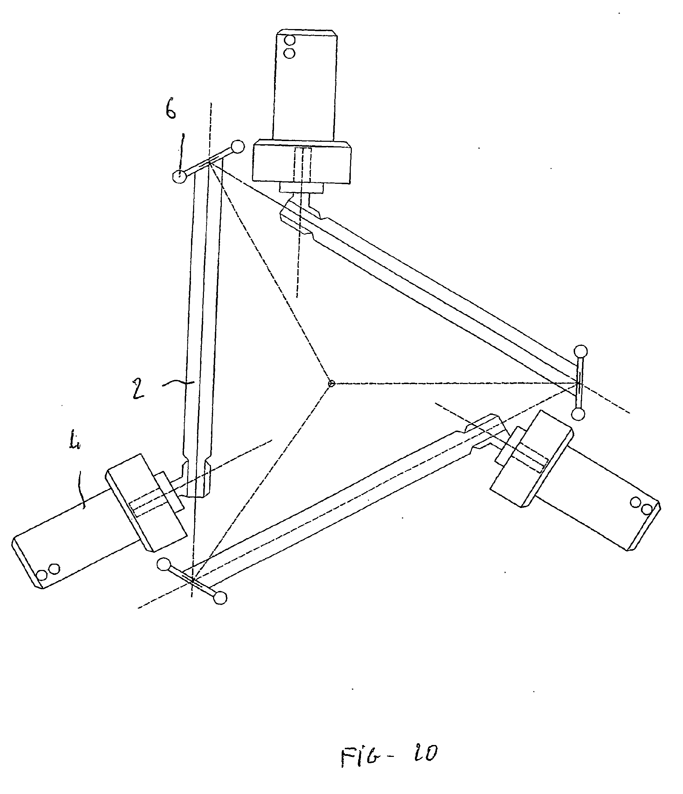

FIG 20 : Vue de dessus des bras d'un robot selon une autre disposition

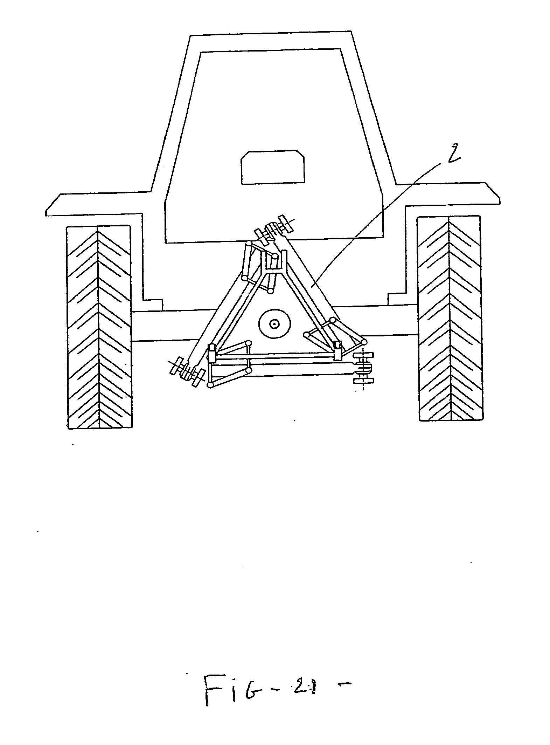

FIG 21 : une application du robot monté à l'arrière d'un véhicule.

En se reportant au dessin, on voit un dispositif 1 de déplacement d'objets du type parallèle.

Ce dispositif permet de déplacer des objets avec une cadence élevée.

Classiquement, le dispositif comprend au moins trois bras 2 pivotants chacun autour d'un axe 3 de pivot.

Les axes de pivots sont soit dans un plan, soit inclinés par rapport à un plan parallèle à un plan de travail de la tête. Généralement lorsque les axes sont inclinés, ils forment une sorte de chapeau chinois sommet en haut mais la pointe en bas est possible et ne change rien à l'invention.

En vue de dessus, les axes de pivots ou leurs projections dans un plan parallèle au plan de travail de la tête forment les côtés d'un polygone tel un triangle pour trois bras et un carré ou rectangle pour quatre bras.

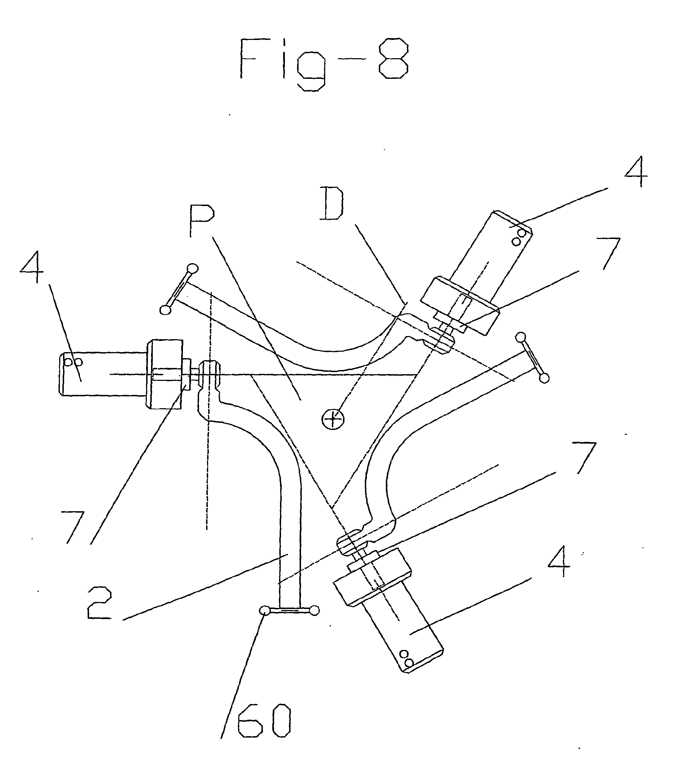

Les bras 2 sont rectilignes ou non rectilignes (figure 8).

Pour des raisons de facilité de compréhension, la description ci-après a été réalisée en considérant que les axes de pivots sont dans un plan horizontal.

Un actionneur 4 engage au moins indirectement une des deux extrémités de chaque bras pivotant, chacun de ces bras 2 étant, en outre, relié à une tête 5 par l'intermédiaire d'éléments de liaison 6 articulés respectivement sur la tête et sur le bras. Ces articulations 60 sont à deux degrés de liberté.

Le dispositif de déplacement du type parallèle forme une sorte de pyramide tronquée déformable à grande base polygonale comprenant au moins trois bras 2 pivotants chacun autour d'un axe 3 de pivot guidé en rotation sur au moins un palier 7, chacun des bras étant actionné par un actionneur 4 et chacun de ces bras étant, en outre, relié à une tête 5 formant la petite base par l'intermédiaire d'éléments de liaison 6 articulés respectivement sur la tête et sur le bras à deux degrés de liberté, la tête gardant toujours son orientation et son inclinaison.

En une position que l'on appellera neutre, la tête se trouve à l'aplomb de la surface projetée et tous les bras sont horizontaux c'est à dire parallèles à un plan de travail de la tête. Les plans de travail de la tête sont parallèles et non-concentriques.

Selon une caractéristique, chaque bras est disposé de telle sorte qu'il est possible à partir du centre géométrique du polygone P, de tracer une demi-droite parallèle à l'axe de pivot de l'un quelconque des bras, ladite droite coupant ledit bras considéré.

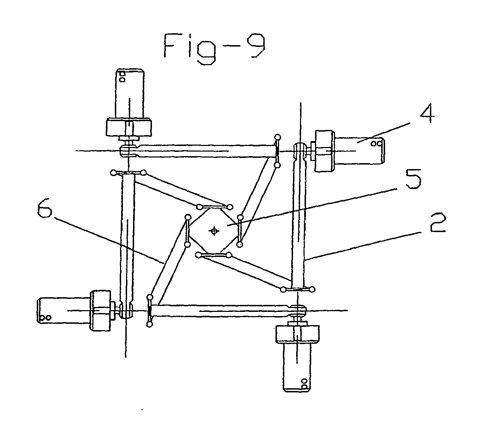

Les axes longitudinaux des bras forment un triangle pour une configuration à trois bras ou, par exemple, un carré (figure 9) lorsqu'il y a quatre bras. Les bras peuvent être plus longs ou plus courts que les cotés du polygone.

Cette configuration des bras se vérifie lorsque les bras sont sensiblement dans un plan parallèle au plan de travail de la tête.

En effet, lorsque les bras sont proches de la verticale, la droite parallèle ne peut couper le bras.

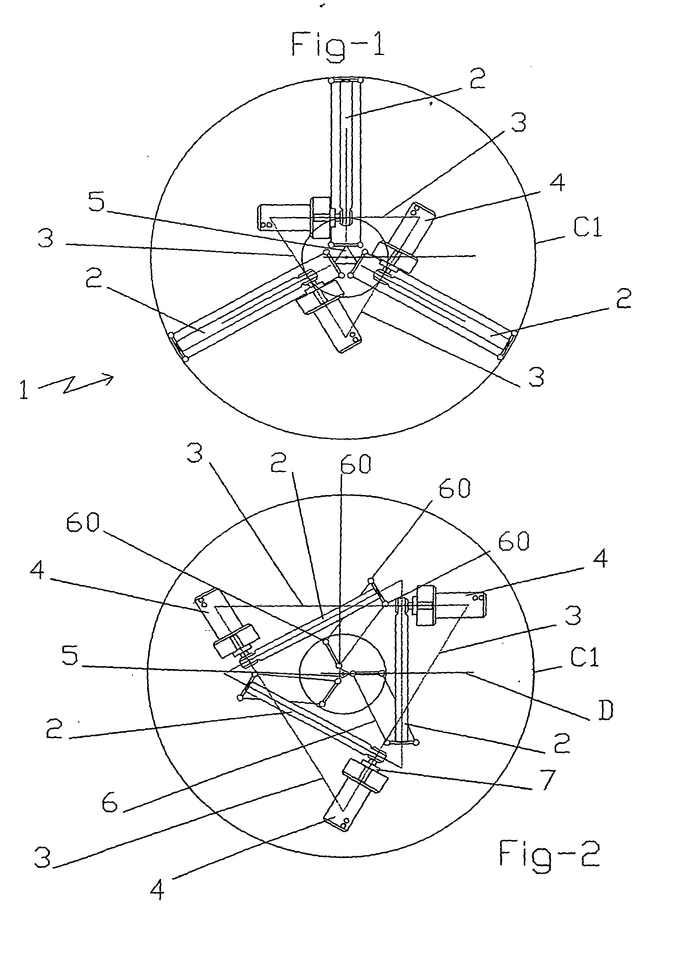

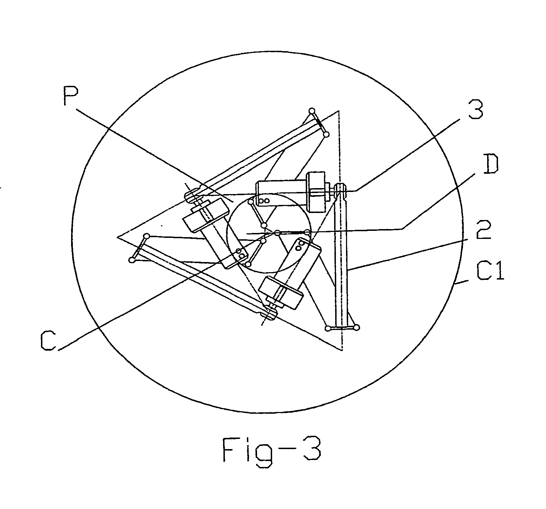

Comme on peut le voir les actionneurs sont montés soient à l'extérieur du polygone exemple de la figure 2, soit au moins pour partie à l'intérieur dudit polygone exemple de la figure 3. Ils peuvent être placés en dehors du plan passant par ce polygone.

En comparant la figure 1 de l'art antérieur et la figure 2 qui est celle de la nouvelle implantation des bras, on constate une différence d'encombrement.

Les robots figure 1 et 2 ont sensiblement la même aire de travail en x,y z mais le robot de la figure 2 est plus compact.

Sur la figure 1, on a représenté l'encombrement par un cercle C1 que l'on a reproduit sur la figure 2. On voit que pour des bras de même longueur l'encombrement est plus réduit dans le mode de réalisation de l'invention.

On voit que cet encombrement peut encore être réduit si on place les actionneurs à l'intérieur du triangle délimité par les axes longitudinaux des bras.

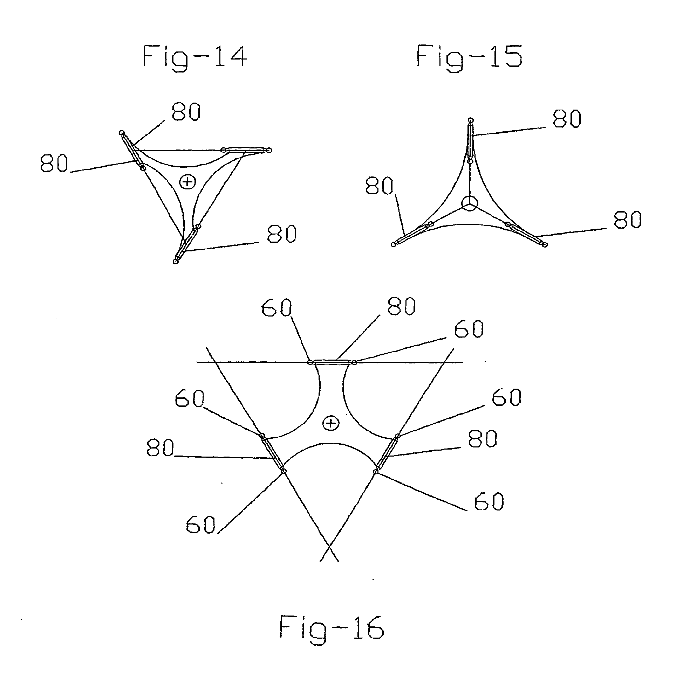

On a représenté en figures 14, 15, 16 des exemples de têtes 5.

Dans l'exemple figure 15, les pièces transversales 80 qui joignent les deux points d'articulations bas des éléments de liaison à la tête sont disposés radialement par rapport à la tête.

Dans les versions des figures 14 et 16 les axes longitudinaux de ces pièces transversales forment un triangle.

Sur la figure 14 le point d'attache des pièces transversales est au sommet du triangle alors que pour la figure 16, le point d'attache est au milieu du coté du triangle. Les axes de ces pièces transversales peuvent être parallèles ou inclinés par rapport au plan de travail de la tête 5.

Dans certaines variantes les éléments de liaison pourront être rectilignes dans d'autres ils pourront être incurvés ou bien en S. Avantageusement on utilisera des rotules 60 en céramique aux points d'articulation avec les éléments de liaison. Il pourra être utile dans les environnements poussiéreux ou humides d'équiper les rotules d'un dispositif de surpression et les paliers de dispositifs d'étanchéité afin d'en prévenir l'encrassement et la détérioration.

Compte tenu des très fortes accélérations dont est capable le manipulateur, il pourra également être utile de doubler les points d'attache des éléments de liaison par des câbles de sécurité ou tout autre élément de même usage. Les éléments de liaison pourront être de section ronde, ovale ou polygonale en brins simples ou assemblés. On voit entre autre que le dispositif comprend un préhenseur 10 à transmission télescopique. Ce préhenseur est monté en son centre (centre de la pyramide à trois cotés lorsque celle ci est en son point zéro, les bras étant dans le même plan que les axes de pivot.).

Un guidage en rotation, pour ce préhenseur est réalisé sur la tête du dispositif.

Un actionneur supplémentaire peut faire tourner le préhenseur autour de son axe longitudinal.

Le préhenseur peut être équipé d'une ventouse, de griffes ou tout autre moyen pour saisir un objet.

Le préhenseur est souvent de longueur variable entre deux points fixes à savoir les articulations extrèmes et il est souvent constitué d'un actionneur, d'une articulation haute, d'une transmission télescopique (deux tiges qui coulissent l'une dans l'autre), d'une articulation basse (cardan ou rotule) positionnée sur la tête et d'un organe de préhension.

Avantageusement, l'articulation haute se positionne au dessus du plan A contenant les bras lorsqu'ils sont horizontaux. C'est à dire, par rapport au plan A, elle se situe dans l'espace opposé à celui contenant la tête. Ou encore le plan A est disposé entre l'articulation haute et la tête.

Les actionneurs sont, par exemple, des moteurs électriques connus sous l'appellation « brushless » mais il pourrait s'agir de moyens différents. Ils peuvent être montés en bout d'axe mais une transmission par courroie crantée ou autre permet de les positionner dans un plan différent.

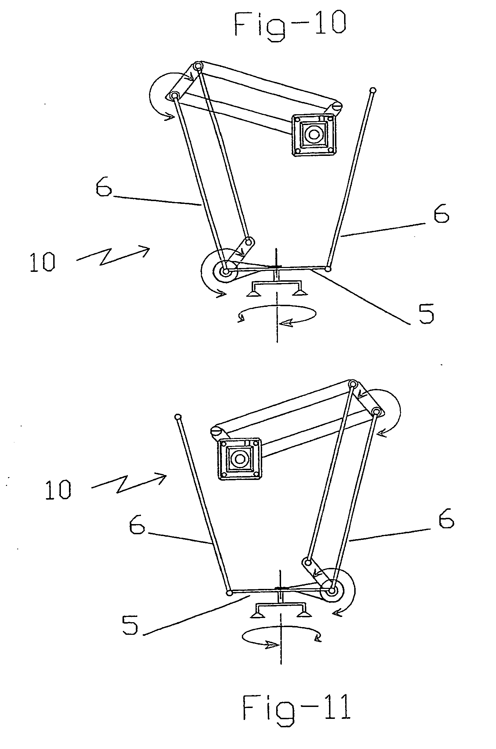

Il peut être prévu que ce préhenseur soit relié à son actionneur non par une transmission télescopique mais par une chaîne cinématique (figure 10-11) parallèle avec système de démultiplication, ou bien par une commande à câbles et avec système de démultiplication.

Il peut être aussi prévu que l'actionneur de ce préhenseur soit monté directement sur la tête mais cela augmente le poids donc l'inertie.

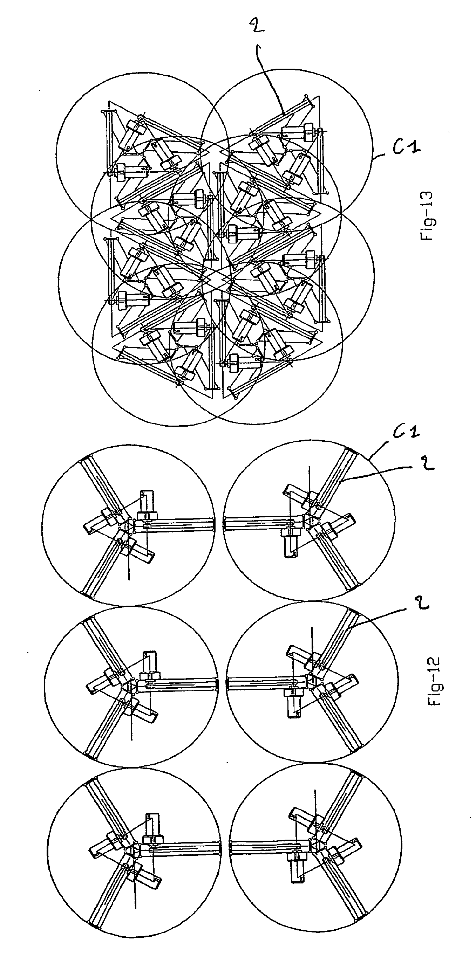

On l'aura vu l'un des avantages de ce dispositif est sa compacité en comparaison à sa zone de travail. Il suffit de se reporter aux figures 12 et 13 pour comparer l'encombrement sur une ligne de production.

Cette compacité permet d'appareiller les robots de nombreuses manières allant jusqu'à la réalisation de matrices de robots, figure 12 .

Lorsque l'on sait que pour les applications de «pick & place » pour le conditionnement de produits manufacturés, une trajectoire sur deux du robot est généralement réalisée à vide, on comprendra tout l'intérêt qu'il y a à appareiller les robots au plus prêt les uns des autres ce qui permet en certains points de l'espace la superposition de leurs aires de travail respectives. Un système de gestion du groupe de robots ainsi constitué permettra à tous les robots de travailler ensemble harmonieusement et sans collisions.

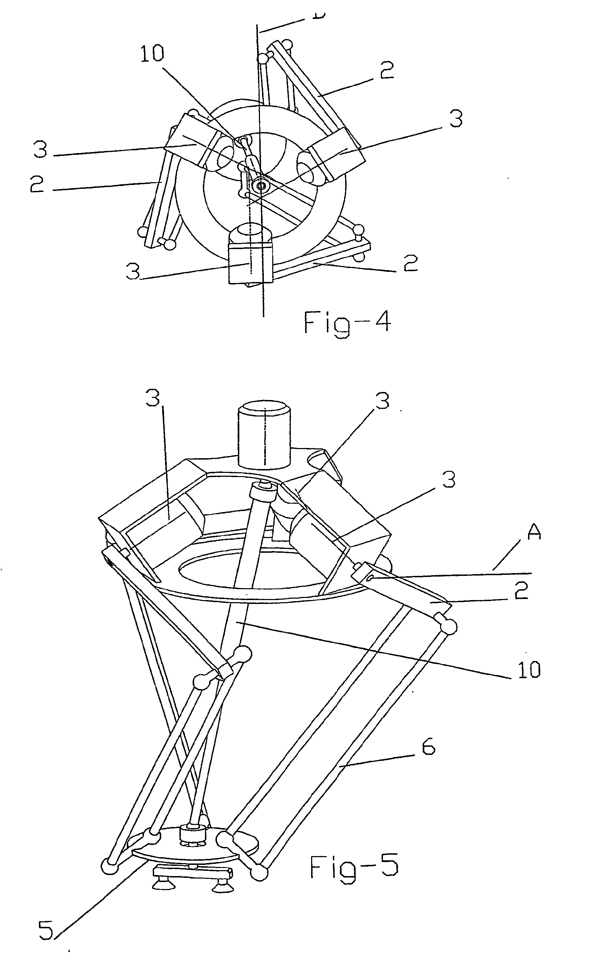

On notera qu'en figure 4 ou 8 les paliers (7) des actionneurs sont en dehors du polygone formé pas les axes de pivotement.

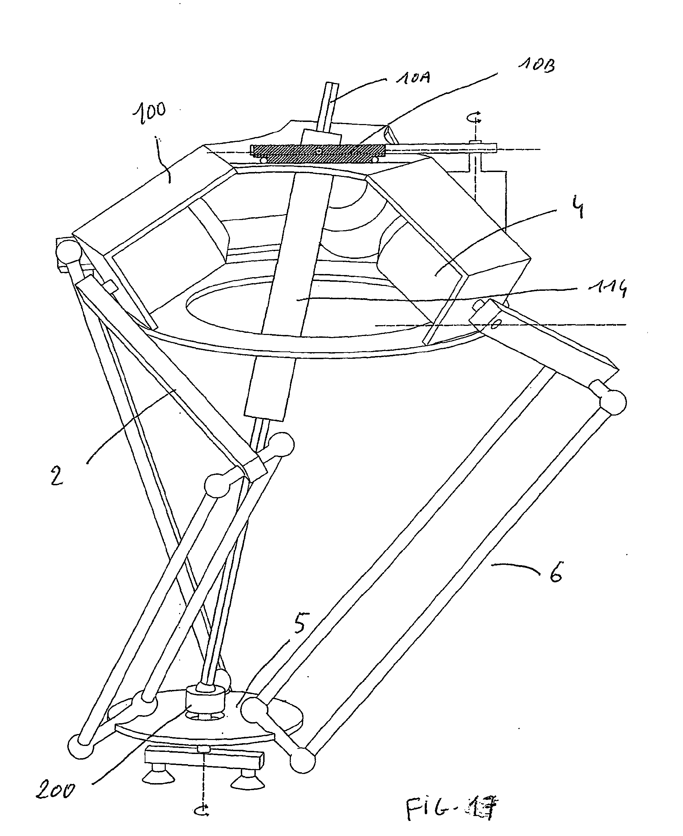

La figure 17 montre un exemple de support 100 sur lequel sont montés les moteurs 4 et les bras 2 supportant les éléments longilignes 6.

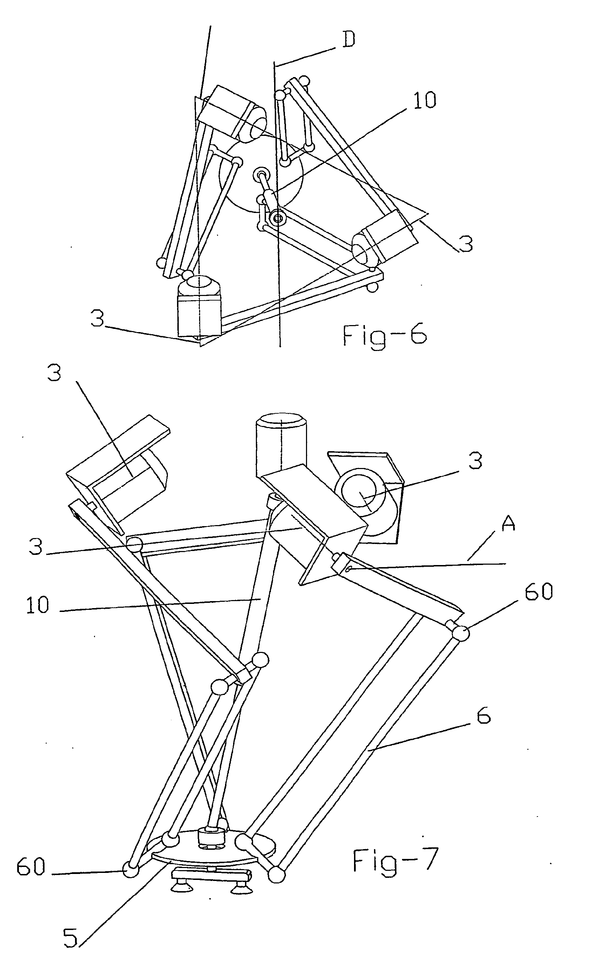

La figure 17 montre un robot équipé d'un préhenseur 10 différent de celui figurant, par exemple, sur la figure 7.

Il se compose d'un élément 10A de longueur invariable relié à la tête 5 par une articulation 200, par exemple du type cardan. Cet élément 10A a son extrémité libre engagée à coulissement dans une moyen 10B de guidage articulé qu'il traverse.

Cette extrémité libre 10C n'est pas immobilisée sur un point fixe, elle est libre de se déplacer dans l'espace.

Ce moyen de guidage est par exemple composé de bagues concentriques.

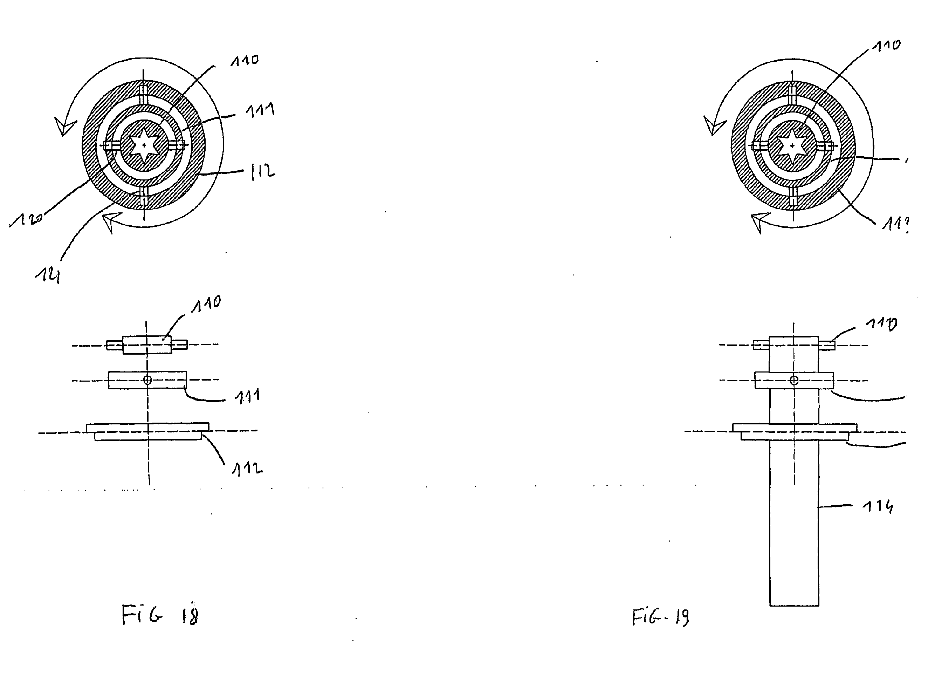

La figure 18 ou 19 montre en partie supérieure du dessin les bagues vues de dessus montées avec les axes 120 et 121 et en partie inférieure les bagues non montées.

Une bague interne 110 articulée autour d'un axe 120 diamétral d'une seconde bague 111 elle-même étant articulée autour d'un axe 121 diamétral à 90 ° du précédent sur une bague externe 112 servant indirectement ou directement de couronne d'entrainement. Une découpe est prévue dans le support 100 pour le passage de l'élément longiligne 10A. Cet élément longiligne 10A est calé en rotation dans la bague interne 110.

Ce moyen de guidage est peu épais (figure 18) ou alors la bague interne se prolonge par une chemise 114 en direction de la tête 5 ce qui augment la longueur de guidage (figures 17 et 19).

On pourrait remplacer les bagues par une sorte de rotule.

Les robots sont souvent représentés suspendus mais ils peuvent être montés sur un support voire sur un véhicule tel un tracteur ou un engin de manutention et travailler dans un plan perpendiculaire au sol.

## Revendications

1. Dispositif de déplacement du type parallèle comprenant au moins trois bras (2) pivotants chacun autour d'un axe de pivot, les axes (3) de pivots formant en vue de dessus les côtés d'un polygone (P) présentant un centre (c) géométrique, chacun des bras étant actionné par un actionneur (4), et chacun de ces bras étant, en outre, relié à une tête (5) formant une petite base par l'intermédiaire d'éléments (6) de liaison articulés respectivement sur la tête et sur le bras, les articulations étant à deux degrés de liberté, la tête gardant toujours son orientation et son inclinaison, ce dispositif étant **caractérisé en ce qu'**en position dite neutre des bras, chaque bras est disposé de telle sorte que si on trace une droite (D) parallèle à l'axe de pivot de l'un quelconque des bras, cette droite passant par le centre (C) géométrique du polygone, ladite droite coupe ledit bras considéré.

2. Dispositif de déplacement du type parallèle selon la revendication 1 **caractérisé en ce que** les axes de pivots sont dans un même plan.

3. Dispositif de déplacement du type parallèle selon la revendication 1 **caractérisé en ce que** les axes de pivots sont inclinés par rapport à un plan horizontal parallèle à un plan de travail de la tête.

4. Dispositif de déplacement du type parallèle selon la revendication 1 **caractérisé en ce que** les actionneurs sont à l'extérieur du polygone formé par les axes de pivots.

5. Dispositif de déplacement du type parallèle selon la revendication 1 **caractérisé en ce que** les actionneurs sont au moins pour partie à l'intérieur du polygone formé par les axes de pivots.

6. Dispositif de déplacement du type parallèle selon l'une quelconque des revendications précédentes **caractérisé en ce que** les pièces transversales (80) qui joignent les deux points d'articulations (60) bas des éléments de liaison à la tête sont disposées radialement par rapport à la tête.

7. Dispositif de déplacement du type parallèle selon l'une quelconque des revendications précédentes **caractérisé en ce que** les éléments (6) de liaison ne sont pas rectilignes.

8. Dispositif de déplacement du type parallèle selon l'une quelconque des revendications précédentes **caractérisé en ce que** les bras (2) ne sont pas rectilignes.

9. Dispositif de déplacement du type parallèle selon la revendication 1 **caractérisé en ce que** les paliers (7) sont en dehors du polygone.

10. Dispositif de déplacement du type parallèle selon l'une quelconque des revendications 1 à 9 **caractérisé en ce qu'**il comprend un préhenseur 10 constitué par un élément longiligne 10A fixé, par une de ses extrémités, sur la tête 5 par une articulation et dont l'autre extrémité 10C est libre.

11. Dispositif de déplacement du type parallèle selon la revendication 10 **caractérisé en ce que** l'élément longiligne 10A est, en outre guidé en translation dans un moyen d'articulation traversé par le dit élément longiligne.

## Claims

1. Parallel motion type device comprising at least three arms (2) each able to pivot about a pivot axis, the pivot axes (3), when viewed from above, forming the sides of a polygon (P) that has a geometric centre (C), each of the arms being actuated by an actuator (4), and each of these arms also being connected to a head (5) that forms a small base by connecting elements (6) respectively articulated to the head and to the arm, the articulations having two degrees of freedom, the head always maintaining its orientation and its inclination, this device being **characterized in that** when the arms are in a so-called neutral position, each arm is positioned in such a way that if a straight line (D) is plotted parallel to the pivot axis of any one of the arms, with this straight line passing through the geometric centre (C) of the polygon, the said straight line will intersect the said arm concerned.

2. Parallel motion type device according to Claim 1, **characterized in that** the pivot axes are all in one and the same plane.

3. Parallel motion type device according to Claim 1, **characterized in that** the pivot axes are inclined with respect to a horizontal plane parallel to a work plane of the head.

4. Parallel motion type device according to Claim 1, **characterized in that** the actuators are on the outside of the polygon formed by the pivot axes.

5. Parallel motion type device according to Claim 1, **characterized in that** the actuators are at least partially inside the polygon formed by the pivot axes.

6. Parallel motion type device according to any one of the preceding claims, **characterized in that** the transverse components (80) which connect the two bottom articulation points (60) of the connecting elements to the head are arranged radially in relation to the head.

7. Parallel motion type device according to any one of the preceding claims, **characterized in that** the connecting elements (6) are not straight.

8. Parallel motion type device according to any one of the preceding claims, **characterized in that** the arms (2) are not straight.

9. Parallel motion type device according to Claim 1, **characterized in that** the bearings (7) are outside the polygon.

10. Parallel motion type device according to any one of Claims 1 to 9, **characterized in that** it comprises a gripper (10) consisting of a longilinear element (10A) fixed, by one of its ends, to the head (5) by an articulation and the other end (10C) of which is free.

11. Parallel motion type device according to Claim 10, **characterized in that** the longilinear element (10A) is also guided in its translational movement in an articulation means through which the said longilinear element passes.

## Patentansprüche

1. Parallelbewegungseinrichtung mit mindestens drei Armen (2), die jeweils um eine Schwenkachse schwenkbar sind, wobei die Schwenkachsen (3) in Draufsicht die Seiten eines Polygons (P) bilden, das eine geometrische Mitte (C) aufweist, wobei jeder der Arme durch einen Aktor (4) betätigt wird und jeder dieser Arme des Weiteren mit einem Kopf (5) verbunden ist, der durch Verbindungselemente (6), die jeweils an dem Kopf und an dem Arm angelenkt sind, eine kleine Basis bildet, wobei die Gelenke zwei Freiheitsgrade aufweisen, wobei der Kopf immer seine Ausrichtung und seine Neigung bewahrt, wobei diese Einrichtung **dadurch gekennzeichnet ist, dass** jeder Arm in der so genannten neutralen Position der Arme so angeordnet ist, dass, wenn man eine Gerade (D) parallel zur Schwenkachse eines der Arme aufträgt, wobei diese Gerade die geometrische Mitte (C) des Polygons durchquert, die Gerade den betreffenden Arm schneidet.

2. Parallelbewegungseinrichtung nach Anspruch 1, **dadurch gekennzeichnet, dass** die Schwenkachsen in der gleichen Ebene liegen.

3. Parallelbewegungseinrichtung nach Anspruch 1, **dadurch gekennzeichnet, dass** die Schwenkachsen bezüglich einer parallel zu einer Arbeitsebene des Kopfs verlaufenden horizontalen Ebene geneigt sind.

4. Parallelbewegungseinrichtung nach Anspruch 1, **dadurch gekennzeichnet, dass** sich die Aktoren außerhalb des durch die Schwenkachsen gebildeten Polygons befinden.

5. Parallelbewegungseinrichtung nach Anspruch 1, **dadurch gekennzeichnet, dass** sich die Aktoren zumindest teilweise im Inneren des durch die Schwenkachsen gebildeten Polygons befinden.

6. Parallelbewegungseinrichtung nach einem der vorhergehenden Ansprüche, **dadurch gekennzeichnet, dass** die Querstücke (80), die die beiden unteren Gelenkpunkte (60) der Verbindungselemente mit dem Kopf verbinden, radial bezüglich des Kopfs angeordnet sind.

7. Parallelbewegungseinrichtung nach einem der vorhergehenden Ansprüche, **dadurch gekennzeichnet, dass** die Verbindungselemente (6) nicht geradlinig sind.

8. Parallelbewegungseinrichtung nach einem der vorhergehenden Ansprüche, **dadurch gekennzeichnet, dass** die Arme (2) nicht geradlinig sind.

9. Parallelbewegungseinrichtung nach Anspruch 1, **dadurch gekennzeichnet, dass** sich die Lager (7) außerhalb des Polygons befinden.

10. Parallelbewegungseinrichtung nach einem der Ansprüche 1 bis 9, **dadurch gekennzeichnet, dass** sie einen Greifer (10) umfasst, der durch ein langgestrecktes Element (10A) gebildet wird, das mit einem seiner Enden durch ein Gelenk am Kopf (5) befestigt ist und dessen anderes Ende (10C) frei ist.

11. Parallelbewegungseinrichtung nach Anspruch 10, **dadurch gekennzeichnet, dass** das langgestreckte Element (10A) des Weiteren in einem von dem langgestreckten Element durchquerten Gelenkmittel translatorisch geführt wird.
